(19) **Europäisches Patentamt / European Patent Office / Office européen des brevets**

(11) **EP 1 917 752 B1**

(12) **EUROPÄISCHE PATENTSCHRIFT**

(45) Veröffentlichungstag und Bekanntmachung des Hinweises auf die Patenterteilung:
**21.03.2012 Patentblatt 2012/12**

(21) Anmeldenummer: **06778307.6**

(22) Anmeldetag: **21.08.2006**

(51) Int Cl.:
**H04L 1/06** (2006.01)

(86) Internationale Anmeldenummer:
**PCT/EP2006/065519**

(87) Internationale Veröffentlichungsnummer:
**WO 2007/023152 (01.03.2007 Gazette 2007/09)**

(54) **VERFAHREN UND SENDEVORRICHTUNG ZUM KODIEREN VON DATEN MIT EINEM DIFFERENZIELLEN RAUM-ZEIT-BLOCKCODE**

METHOD AND TRANSMITTING DEVICE FOR ENCODING DATA IN A DIFFERENTIAL SPACE-TIME BLOCK CODE

PROCEDE ET DISPOSITIF EMETTEUR POUR CODER DES DONNEES AVEC UN CODE DE BLOC ESPACE-TEMPS DIFFERENTIEL

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **24.08.2005 DE 102005040067**

(43) Veröffentlichungstag der Anmeldung:
**07.05.2008 Patentblatt 2008/19**

(73) Patentinhaber: **SIEMENS AKTIENGESELLSCHAFT**
**80333 München (DE)**

(72) Erfinder:
• **VANAEV, Alexander**
**21073 Hamburg (DE)**

• **ROHLING, Hermann**
**38304 Wolfenbüttel (DE)**

(56) Entgegenhaltungen:
• **ZHENG DU ET AL: "A new two level differential unitary space-time modulation" WIRELESS COMMUNICATIONS AND NETWORKING CONFERENCE, 2005 IEEE NEW ORLEANS, LA, USA 13-17 MARCH 2005, PISCATAWAY, NJ, USA, IEEE, 13. März 2005 (2005-03-13), Seiten 479-482, XP010791210 ISBN: 0-7803-8966-2**
• **XIANG-GEN XIA: "Differentially En/Decoded Orthogonal Space-Time Block Codes With APSK Signals" IEEE COMMUNICATIONS LETTERS, IEEE SERVICE CENTER, PISCATAWAY, NJ, US, Bd. 6, Nr. 4, April 2002 (2002-04), XP011066340 ISSN: 1089-7798 in der Anmeldung erwähnt**

EP 1 917 752 B1

**Beschreibung**

Die Erfindung bezieht sich auf ein Verfahren zum Kodieren von Daten mit einem differenziellen Raum-Zeit-Blockkode (DSTBC - Differential Space-Time Block Code) gemäß den oberbegrifflichen Merkmalen des Patentanspruchs 1, auf ein Verfahren zum Dekodieren derart kodierter und übertragener Daten sowie auf eine Sendevorrichtung bzw. auf eine Empfangsvorrichtung zum Durchführen solcher Verfahren.

Ein DSTBC-Schema für zwei Sendeantennen wurde beschrieben in V. Tarokh und H. Jafarkhani, "A differential detection scheme for transmit diversity," IEEE Journal on Selected Areas in Communications, vol. 18, pp. 1169-1174, Juli 2000. DSTBC beruht auf STBC (Space-Time Block Code), beschrieben in S. Alamouti, "A simple transmit diversity technique for wireless communications," IEEE Journal on Selected Areas of Communications, Special Issue on Signal Processing for Wireless Communications, vol. 16, no. 8, pp. 1451-1458, 1998. Eine weitere Beschreibung von DSTBC findet sich in C. Gao, A. Haimovich, D. Lao "Bit Error Probability for Space-Time Block Code with Coherent and Differential Detection", IEEE Vehicle Technology Conference (VTC'02 Fall), September 2002, Vancouver, Canada. Eine Verallgemeinerung von DSTBC findet sich in H. Jafarkhani und V. Tarokh, "Multiple transmit antenna differential detection from generalized orthogonal designs," IEEE Transactions on Information Theory, vol. 47, pp. 2626-2631, September 2001.

Ähnlich wie bei STBC belegt ein einzelnes Kodewort bzw. ein einzelner Kode von DSTBC zwei Zeitschlitze des Übertragungsträgers. Jeder einzelne Kode trägt dabei zwei Informations-symbole. Für die DSTBC-Technologie ist keinerlei Kanalinformation erforderlich, weder auf der Seite des Empfängers noch auf der Seite des Senders, was diese Technologie insbesondere für Fälle sehr attraktiv macht, bei denen eine zuverlässige Kanalinformation schwer zu erhalten ist. Bei DSTBC-Technologie wird eine differenziell kodierte Kodesequenz $C_k$ rekursiv berechnet gemäß

$$C_k = S_k \cdot C_{k-1} \quad . \tag{1}$$

Die jeweils nächste Kodematrix $C_k$ wird berechnet durch Multiplizieren einer momentanen Informationsmatrix $S_k$ mit der vorherigen Kodematrix $C_{k-1}$. Dadurch wird die Informationsmatrix $S_k$ ähnlich zu differenziellen Phasen-Modulations-Schemata differenziell kodiert. Die Informationsmatrix $S_k$ wird erzeugt auf Basis von zwei Informationssymbolen $s_{1,k}$ und $s_{2,k}$, welche zu übertragen sind gemäß einer Informationsmatrix-Struktur mit

$$S_k = \begin{pmatrix} s_{1,k} & s_{2,k} \\ -s_{2,k}^* & s_{1,k}^* \end{pmatrix} \tag{2}$$

Falls die Informationssymbole $s_{1,k}$ und $s_{2,k}$ aus einem reinen PSK-Konstellationsdiagramm (PSK: Phase Shift Keying - Phasenverschiebungs-Verschlüsselung) genommen werden, werden die Betragswerte normiert gemäß

$$|s_{1,k}| = |s_{2,k}| = \frac{1}{\sqrt{2}} \quad . \tag{3}$$

In diesem Fall folgt aus (2)

$$S_k \cdot S_k^* = I_2 \quad . \tag{4}$$

Dabei gilt, dass für Modulationsschemata mit zunehmend höherer Ordnung im Vergleich zu QAM (Quadratur-AmplitudenModulation) eine Verschlechterung von PSK zunehmend größer wird und 10 dB für Modulationsschemata mit 6 Bit/s/Hz Bandbreiteeffizienz nahezu erreicht wird.

Die Leistungsfähigkeit von differenziellen Einzelantennen-Übertragüngstechniken und DPSK-Modulation (DPSK: Differenzielle PSK) auf höheren Level ist beschrieben in H. Rohling und V. Engels, "Differential amplitude phase shift keying, (DAPSK) - a new modulation method for DVBT" in International Bröadcasting Convention, pp. 102-108, 1995. DAPSK-Modulationsschemata zeigen sich als wesentlich effizienter im Vergleich zu reiner PSK-Technologie. Diese Analyse motivierte zu einem ähnlichen Design differenzieller Modulationsschemata für DSTBC, welches simultane Amplituden- und Phasenverschiebungs-Verschlüsselung (APSK) verwendet. Vorschläge zum Integrieren von APSK in DSTBC sind beschrieben in X.-G. Xia, "Differentially en/decoded orthogonal space-time block codes with APSK signals" IEEE Communications Letters, vol. 6, pp. 150-152, April 2002, G. Bauch, "A Bandwidth-efficient Scheme for Non-coherent Transmit Diversity", in Proc. of IEEE Globecom Conference, San Francisco, CA, USA, December 1-5, 2003 und G. Bauch, "Differential Amplitude and Unitary Space-Time Modulation", in Proc. of 5th International ITG Conference on Source and Channel Coding, Erlangen, Januar 14 - 16, 2004. Der allgemeine Ansatz beruht dabei auf der Einführung einer differenziellen Amplitudenmodulation über die gesamte zu übertragende.Sequenz aus Kodematrizen $C_k$. Diese Technik wird analytisch beschrieben durch

$$C_k \cdot C_k^* = a_k \cdot I_2 \; , \qquad\qquad (5)$$

was zu verschiedenen Amplituden der übertragenen Kodeblöcke führt. Die eigentliche Information wird in das Amplitudenverhältnis über zwei zueinander benachbarte Kodematrizen $C_k$ und $C_{k-1}$ kodiert. In diesem Fall wird die Demodulation für Amplitude und Phasenbit separat durchgeführt.

Ausgegangen wird somit von DSTBC für zwei Sendeantennen als einer von verschiedenen MIMO-Übertragungstechniken (MIMO: Multiple Input Multiple Output - mehrfache Eingabe - mehrfache Ausgabe). Ähnlich einem kohärenten Raum-Zeit-Blockkode gemäß STBC basiert DSTBC auf einem komplexen orthogonalen Design. Jedoch benötigt DSTBC keine Kanalinformation. Beim ursprünglichen DSTBC wurde nur eine reine PSK-Modulation mit einer entsprechend sehr beschränkten Bandbreite-Effizienz verwendet. Im Rahmen einer Erweiterung wurde auch eine Amplitudendifferenz zwischen zwei aufeinanderfolgenden DSTBC-Blöcken kodiert. Die beiden Informationssymbole innerhalb eines einzelnen solchen DSTBC-Blocks haben dabei stets die gleiche Amplitude. Jedoch ist die Einhüllende (engl. Envelope) des Übertragungssignals nicht konstant.

Aus dem Artikel von Hwang, C.-S. "Differential Space Time Block Codes Using Nonconstant Modulus Constellations", IEEE Transactions on Signal Processing, Vol. 51, No. 11, November 2003, S. 2955-2964, ist ebenfalls eine Kodierung von Informationen mittels differenzieller Raum-Zeit-Blockkodes bekannt. Die Aufgabe der Erfindung besteht darin, ein Verfahren zum Kodieren von Daten mit einem differenziellen Raum-Zeit-Blockcode, ein Verfahren zum Dekodieren derart kodierter und übertragener Daten sowie eine Sendevorrichtung und eine Empfangsvorrichtung zum Durchführen solcher Verfahren zu verbessern. Insbesondere soll der Leistungsverbrauch bei gleicher Verbindungsqualität im Vergleich zu konventionellem PSKmodulierten DSTBC bei geringer Berechnungskomplexität verringert werden und die Bandbreiteeffizienz von DSTBC bei gleichzeitiger Amplituden- und Phasenmodulation erhöht werden.

Diese Aufgabe wird gelöst durch ein Verfahren zum Kodieren von Daten mit einem differentiellen Raum-Zeit-Blockcode , durch ein Verfahren zum Dekodieren derart kodierter und übertragener Daten sowie durch eine Sendevorrichtung bzw. Empfangsvorrichtung gemäß den Merkmalen der unabhängigen Patentansprüche. Vorteilhafte Ausgestaltungen sind Gegenstand abhängiger Patentansprüche.

Bevorzugt wird demgemäß ein Verfahren zum Kodieren von Daten mit einem differenziellen Raum-Zeit-Blockcode, bei dem eine Kodematrix als ein DSTBC-Block mit über eine Funkschnittstelle zu übertragenden Symbolen aus einer momentanen Informationsmatrix mit einer vorherigen Kodematrix rekursiv berechnet wird, wobei die Informationsmatrix auf zumindest zwei Informationssymbolen basiert, welche zu übertragen sind und wobei eine Amplitudenmodulation durchgeführt wird, wobei die Information der Amplitudenmodulation in eine Amplitudendifferenz der Informationssymbole innerhalb jedes einzelnen DSTBC-Blocks kodiert wird.

Vorteilhaft ist dabei ein Verfahren, bei dem eine Phasenmodulation und die Amplitudenmodulation kombiniert angewendet werden.

Vorteilhaft ist weiterhin ein Verfahren, bei dem die Summe Symbol-Betrags-Werte der Informationssymbole normiert wird gemäß

$$\left| s_{1,k} \right|^2 + \left| s_{2,k} \right|^2 = 1 \; .$$

Vorteilhaft ist ein Verfahren, bei dem die beiden Informationssymbole hinsichtlich deren Informationssymbol-Amplitude zu variieren, wobei jedoch eine konstante Sendeenergie verwendet wird.

Vorteilhaft ist ein Verfahren, bei dem die Kodematrix durch Multiplizieren einer momentanen Informationsmatrix mit einer vorherigen Kodematrix berechnet wird.

Vorteilhaft ist ein Verfahren, bei dem eine Amplitude der Informationssymbole variiert und dabei deren Summe der Amplitudenquadrate konstant gehalten wird, was die DSTBC-Verarbeitung ohne jegliche Änderungen durchführbar macht. Vorteilhaft ist ein Verfahren, bei dem eine konstante Übertragungssignal-Einhüllende zusätzlich mit weiteren Kodierverfahren zum Kodieren der Information der Amplitudenmodulation in Amplitudeninformationen des DSTBC-Blocks kombiniert wird.

Vorteilhaft ist ein Verfahren, bei dem $2 \cdot L$ Informations-Bits auf zwei Informationssymbole abgebildet werden, wobei bei einem ersten Schritt die ersten L Informations-Bits auf ein erstes Modulationssymbol mittels einer ersten PSK-Modulation abgebildet werden und bei einem zweiten Schritt die nachfolgenden L-1 Informations-Bits auf ein zweites Modulations-Symbol mittels einer zweiten PSK-Modulation abgebildet werden, wobei, falls ein letztes Informations-Bit einen Wert von 1 hat, in einem nachfolgenden Schritt das erste Modulations-symbol dem ersten Informationssymbol zugewiesen wird und das zweite Mödulationssymbol dem zweiten Informationssymbol zugewiesen wird und, andernfalls, in dem nachfolgenden Schritt das erste Modulationssymbol dem zweiten Informationssymbol zugewiesen wird und das zweite Modulationssymbol dem ersten Informationssymbol zugewiesen wird.

Vorteilhaft ist ein solches Verfahren, bei dem der ersten PSK-Modulation ein erstes PSK-Konstellations-Diagramm mit einer ersten Amplitude und der zweiten PSK-Modulation ein zweites PSK-Konstellations-Diagramm mit einer zweiten Amplitude zugeordnet ist, wobei beiden Amplituden zueinander ungleich sind ($A_1 > A_2$) und die Summe der Amplitudenquadrate gleich 1 ist ( $A_1^2 + A_2^2 = 1$ ).

Vorteilhaft ist ein solches Verfahren, bei dem ein Amplituden-Verhältnis der ersten Amplitude A1 relativ zu der zweiten Amplitude A2 unter Berücksichtigung der Anzahl der verwendeten Empfangsantennen bestimmt wird mittel seines Amplituden-Faktors a gemäß

$$A_1 = \frac{\sqrt{1+a}}{\sqrt{2}}, \quad A_2 = \frac{\sqrt{1-a}}{\sqrt{2}} .$$

Bevorzugt wird außerdem ein Verfahren zum DeKodieren empfangener DSTBC-Blöcke, welche mit einem solchen Verfahren kodiert wurden, bei dem erst letzte Informations-Bit zweier empfangener Informationssymbole demoduliert wird und danach eine Maximal-Wahrscheinlichkeits-PSK-Demodulation für die empfangenen Informationssymbole angewendet wird, um ursprüngliche Informations-Bits zu rekonstruieren. Vorteilhaft ist ein Verfahren, bei dem nach dem Demodulieren der letzten Informations-Bit Magnituden bzw. Beträge der empfangenen Informationssymbole verglichen werden. Vorteilhaft ist ein Verfahren, bei dem nach dem Demodulieren der letzten Informations-Bit abhängig vom Amplitudenverhältnis der letzten Bits entschieden wird, dass entweder ein erstes der empfangenen Informationssymbole mittels einer ersten PSK-Demodulation demoduliert wird und ein zweites der empfangenen Informationssymbole mittels einer zweiten PSK-Demodulation demoduliert wird oder umgekehrt dazu das erste der empfangenen Informations-symbole mittels der zweiten PSK-Demodulation demoduliert wird und das zweite der empfangenen Informationssymbole mittels der ersten PSK-Demodulation demoduliert wird.

Vorteilhaft ist insbesondere eine Sendevorrichtung zum Übertragen von Daten über eine Funkschnittstelle mit einem differentiellen Raum-Zeit-Blockcode mit einer Modulationseinrichtung zum Durchführen eines solchen Verfahrens zum Bereitstellen einer Kodematrix als einem DSTBC-Block aus zu übertragenden Symbolen. Vorteilhaft ist insbesondere auch eine Empfangsvorrichtung zum Empfangen von Daten über eine Funkschnittstelle, wobei die Daten mit einem differenziellen Raum-Zeit-Blockcode (DSTBC) gemäß einem solchen Verfahren bereitgestellt wurden, bzw. eine Empfangsvorrichtung zum Empfangen von modulierten Daten und zum Durchführen eines solchen Demodulationsverfahrens.

Beschrieben wird somit ein Modulationsschema für DSTBC, bei welchem PSK und eine Amplitudenmodulation kombiniert werden. Zusätzlich zu dem Einsatz von PSK wird die Information in Art einer Amplitudendifferenz von zwei Informationssymbolen innerhalb eines einzelnen DSTBC-Blocks kodiert. Während die Amplitude der Informationssymbole variiert, bleibt deren Summe konstant, was die DSTBC-Verarbeitung ohne jegliche Änderungen durchführbar macht.

Das vorgeschlagene Modulationsschema basiert auf der Tatsache, dass die gleiche Amplitudenkondition der beiden Informationssymbole ausreichend aber nicht notwendig für eine DSTBC-Operation ist. Bei dem bevorzugten Modulationsschema wird die Information in die Amplitudendifferenz der beiden Informationssymbole innerhalb jedes einzelnen DSTBC-Blocks kodiert. Durch dieses Modulationsschema wird die erforderliche Übertragungsleistung im Vergleich zu konventionellem PSKmoduliertem DSTBC bei Beibehaltung der gleichen Verbindungsqualität reduziert. Die Berechnungskomplexität des Modulationsschemas ist gering und vergleichbar zu der Berechnungskomplexität für konventionelle DSTBC mit PSK. Die Leistungsfähigkeit ist insgesamt erhöht. Eine konstante Übertragungssignal-Einhüllende kann zusätzlich mit Lösungen für sich bekannter Vorschläge zum Kodieren der Information in Amplitudeninformationen des DSTBC-Blocks kombiniert werden.

Die Verfahrensweise ermöglicht insbesondere auch eine Nachricht einem Träger im Bereich der OFDM-Übertragungstechnik (OFDM: Orthogonal Frequency Division Modulation - orthogonale Frequenzaufteilungs-Modulation) aufzumodulieren. In einem solchen System kann die differenzielle Übertragung für jeden Subträger parallel durchgeführt werden. In letzterem Fall ist dann unter dem Träger auch ein individueller Subträger eines Mehrträgersystems zu verstehen.

Ein Ausführungsbeispiel wird nachfolgend anhand der Zeichnung näher erläutert. Es zeigen:

Fig.     1 ein Ablaufdiagramm mit Schritten zum Kodieren von Daten,

Fig. 2     eine Übertragungsanordnung für DSTBC mit zwei Sende-und einer Empfangsantenne,

Fig. 3     eine solche Anordnung mit zwei Sendeantennen und einer Vielzahl von Empfangsantennen,

Fig. 4     ein 2L-APSK-Modulationsschema für 3 Bit/s/Hz-Bandbreiteneffizienz,

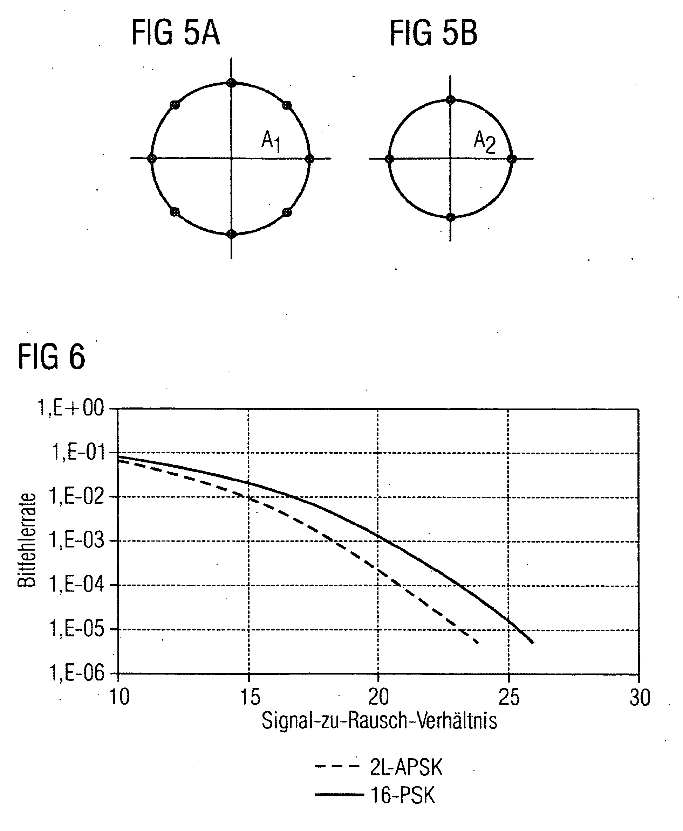

Fig. 5     eine Bit-Abbildung, und

Fig. 6     ein Vergleich einer Bitfehlerrate gegenüber einem Signal-zu-Rausch-Verhältnis für 2L-APSK gegenüber 16-PSK.

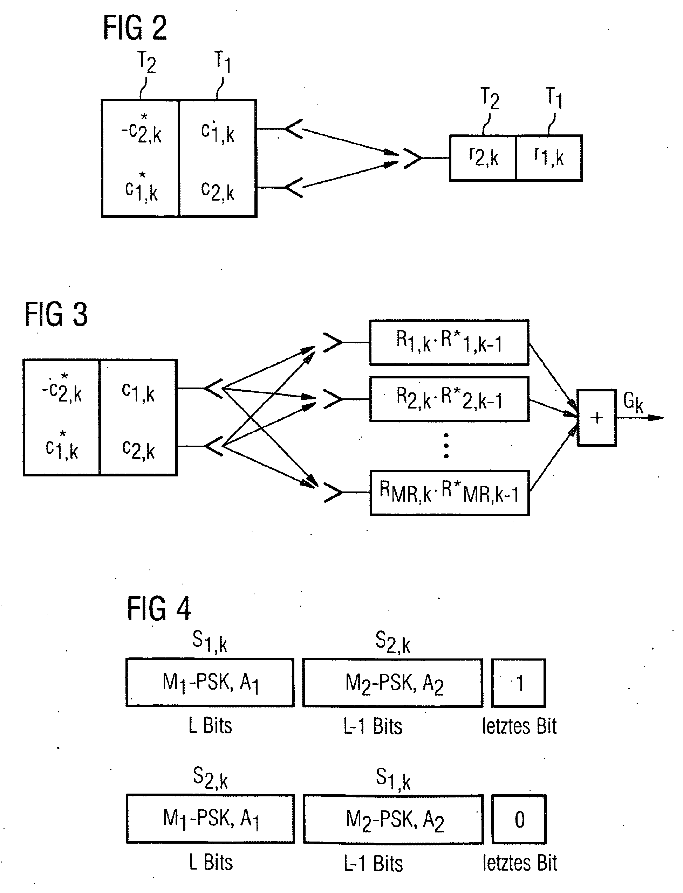

Die Kodierung basiert auf den Grundlagen, wie sie von DSTBC-Schemata bekannt sind, welche auf reiner Phasenverschiebungs-Verschlüsselung basieren. Eine Erläuterung des Grundprinzips erfolgt dabei beginnend mit einer beispielhaften Anordnung mit zwei Sendeantennen und einer Empfangsantenne, wie dies in Fig. 2 skizziert ist.

Zum Verständnis wird einleitend DSTBC für zwei Sendeantennen und eine Empfangsantenne beschrieben, wobei eine schematische Anordnung der zu übertragenden Kodedaten bzw. der empfangenen Daten in Fig. 2 skizziert ist. Der zu übertragende Kode vom DSTBC wird durch eine Kodematrix C gemäß Formel (6) wiedergegeben. Die erste und zweite Zeile entsprechen dabei zu übertragenden komplexwertigen Basisbandsymbolen in einem ersten bzw. zweiten Zeitschlitz $T_1$, $T_2$ und die Spalten entsprechen den beiden Sendeantennen einer entsprechenden Sendevorrichtung. Zum Initialisieren einer Übertragung wird als erstes eine Referenz-Kodematrix $C_0$ übersendet, welche keine eigentlichen Informationen trägt. Entsprechend gilt

$$C_0 = \begin{pmatrix} c_{1,0} & c_{2,0} \\ -c_{2,0}^* & c_{1,0}^* \end{pmatrix} . \tag{6}$$

mit kodierten komplexwertigen Symbolen $c_{1,0}$ und $c_{2,0}$. Ohne Verlust der Allgemeinheit kann angenommen werden, dass die Übertragungsleistung für jeden einzelnen Zeitschlitz $T_1$, $T_2$ auf Eins normiert werden kann, so dass für die kodierten Symbole gilt

$$\left| c_{1,0} \right|^2 + \left| c_{1,0} \right|^2 = 1 . \tag{7}$$

Jede Kodematrix C kann wie diese erste zu übertragende Kodematrix $C_0$ gemäß Formel (6) und (7) konstruiert werden. Im vorliegenden Fall handelt es sich um eine unitäre Matrix, da das Produkt $C_0 \cdot C_0^*$ eine Einheitsmatrix ist gemäß

$$C_0 \cdot C_0^* = \left( \left| c_{1,0} \right|^2 + \left| c_{1,0} \right|^2 \right) \cdot I_2 = I_2 . \tag{8}$$

Die differenziell kodierte Sequenz aus Kodematrizen $C_k$ wird rekursiv berechnet gemäß

$$C_k = S_k \cdot C_{k-1} . \tag{9}$$

Die jeweils nächste Kodematrix $C_k$ wird durch Multiplizieren der momentanen Informationsmatrix $S_k$ mit der vorherigen Kodematrix $C_{k-1}$ berechnet. Dadurch wird die Informationsmatrix $S_k$ ähnlich den differenziellen Phasenmo-

dulations-Schemata differenziell kodiert. Die Informationsmatrix $S_k$ basiert auf zwei Informationssymbolen $s_{1,k}$ und $s_{2,k}$, welche zu übertragen sind gemäß der Informationsmatrix-Struktur der Informationsmatrix $S_k$ mit

$$S_k = \begin{pmatrix} s_{1,k} & s_{2,k} \\ -s_{2,k}^* & s_{1,k}^* \end{pmatrix}. \tag{10}$$

Falls die Informationssymbole $s_{1,k}$ und $s_{2,k}$ aus einem reinen PSK-Konstellationsdiagramm genommen werden, werden die Betragswerte normiert gemäß der für sich bekannten jedoch gemäß dem bevorzugten Ausführungsbeispiel nicht erforderlichen Bedingung

$$|s_{1,k}| = |s_{2,k}| = \frac{1}{\sqrt{2}} \tag{11}$$

In diesem Fall folgt aus (10)

$$S_k \cdot S_k^* = I_2. \tag{12}$$

Dies ermöglicht zu zeigen, dass die unitäre Eigenschaft der Kodematrix $C_k$ während des rekursiven Kodierungsprozesses erhalten bleibt gemäß

$$C_k \cdot C_k^* = S_k \cdot C_{k-1} \cdot C_{k-1}^* \cdot S_k^* = I_2. \tag{13}$$

Aufgrund der unitären Eigenschaft der Kodematrix $C_k$ gemäß (13) bleibt die Übertragungsleistung unverändert, woraus folgt, dass die Informationsmatrix $S_k$ erhalten werden kann durch

$$C_k C_{k-1}^* = S_k \cdot C_{k-1} C_{k-1}^* = S_k. \tag{14}$$

Die Signalverarbeitung in einer Empfangsvorrichtung wird anhand eines einfachen Ausführungsbeispiels mit nur einer einzelnen Empfangsantenne nachfolgend erläutert. Ein Empfangssignal $r_{1,k}$, $r_{2,k}$ ist als komplexwertiger Vektor $r$ darstellbar, welcher auf dem empfangenen Signal der übertragenen Kodematrix $C_k$ beruht, wobei die erste Empfangssignal-Komponente $r_{1,k}$ das empfangene Signal im ersten Zeitschlitz $T_1$ und die zweite Empfangssignal-Komponente $r_{2,k}$ die empfangene Signalkomponente in dem zweiten Zeitschlitz $T_2$ eines einzelnen Kodeblocks $C_k$ darstellt. Es gilt

$$\begin{pmatrix} r_{1,k} \\ r_{2,k} \end{pmatrix} = \begin{pmatrix} c_{1,k} & c_{2,k} \\ -c_{2,k}^* & c_{1,k}^* \end{pmatrix} \cdot \begin{pmatrix} h_{1,k} \\ h_{2,k} \end{pmatrix} + \begin{pmatrix} n_{1,k} \\ n_{2,k} \end{pmatrix}, \tag{15}$$

wobei $h_{1,k}$ und $h_{2,k}$ einen Kanalübertragungs-Funktionsfaktor von der ersten bzw. zweiten Sendeantenne bezeichnen und $n$ additives Rauschen bezeichnet. In äquivalenter Art und Weise ist dies auch darstellbar durch

$$\begin{pmatrix} r_{1,k} & -r_{2,k}^{*} \\ r_{2,k} & r_{1,k}^{*} \end{pmatrix} = \begin{pmatrix} c_{1,k} & c_{2,k} \\ -c_{2,k}^{*} & c_{1,k}^{*} \end{pmatrix} \cdot \begin{pmatrix} h_{1,k} & -h_{2,k}^{*} \\ h_{2,k} & h_{1,k}^{*} \end{pmatrix} + \begin{pmatrix} n_{1,k} & -n_{2,k}^{*} \\ n_{2,k} & n_{1,k}^{*} \end{pmatrix} \qquad (16)$$

bzw. in Matrixform durch

$$R_k = C_k H_k + N_k, \qquad (17)$$

wobei

$$R_k = \begin{pmatrix} r_{1,k} & -r_{2,k}^{*} \\ r_{2,k} & r_{1,k}^{*} \end{pmatrix}, C_k = \begin{pmatrix} c_{1,k} & c_{2,k} \\ -c_{2,k}^{*} & c_{1,k}^{*} \end{pmatrix}, H_k = \begin{pmatrix} h_{1,k} & -h_{2,k}^{*} \\ h_{2,k} & h_{1,k}^{*} \end{pmatrix}, N_k = \begin{pmatrix} n_{1,k} & -n_{2,k}^{*} \\ n_{2,k} & n_{1,k}^{*} \end{pmatrix}$$

$$(18)$$

gilt. Die Empfangssignal-Matrix $R_k$ wird durch den Empfänger gemessen, während die Kodematrix $C_k$, die Funkkanal-Übertragungsmatrix $H_k$ und das Rauschen $N_k$ für den Empfänger vollständig unbekannt sind. Das Dekodierverfahren wird durch Multiplizieren der empfangenen Signalmatrix $R_k$ mit der hermitischen der zuvor empfangenen Empfangssignal-Matrix $R_{k-1}$ durchgeführt. Es gilt

$$G_k = R_k \cdot R_{k-1}^{*} = (C_k H_k + N_k) \cdot (C_{k-1} H_{k-1} + N_{k-1})^{*} = C_k H_k H_{k-1}^{*} C_{k-1}^{*} + noise, \quad (19)$$

wobei $G_k$ eine Demodulations-Matrix darstellt. Unter der Annahme, dass sich die Kanalbedingungen zwischen zwei aufeinander folgenden Kode-Blöcken $C_{k-1}$ und $C_k$ nicht signifikant ändern, das heißt $H_k = H_{k-1}$ gilt, folgt daraus

$$H_k H_{k-1}^{*} = \left( |h_{1,k}|^{2} + |h_{2,k}|^{2} \right) \cdot I_2 \qquad (20)$$

Daher enthält die Demodulations-Matrix $G_k$ die beiden Symbole der Informations-Matrix $S_k$ direkt gemäß

$$G_k = \left( |h_{1,k}|^{2} + |h_{2,k}|^{2} \right) S_k + noise \qquad (21)$$

Vorteilhaft ist anzumerken, dass die Demodulations-Matrix $G_k = R_k \cdot R_{k-1}^{*}$ die gleiche Struktur wie die Informationsmatrix $S_k$ und die Kodematrix $C_k$ hat. Es gilt entsprechend

$$G_k = \begin{pmatrix} g_{1,k} & g_{2,k} \\ -g_{2,k}^{*} & g_{1,k}^{*} \end{pmatrix} \qquad (22)$$

Ohne irgendeine Berücksichtigung von Noise bzw. Rauschen ist die Demodulations-Matrix $G_k$ proportional zu

der Informations-matrix $S_k$. Der reell-wertige Skalierungsfaktor $(|h_{1,k}|^2+|h_{2,k}|^2)$ ist empfängerseitig in der Empfangsvorrichtung unbekannt, so dass es für die Empfangsvorrichtung technisch im wesentlichen nicht erforderlich ist, die absolute Übertragungsleistung zu schätzen. Jedoch können die relative Phase und die relative Amplitude der Informations-Matrix $S_k$ bzw. von deren Koeffizienten zurückgewonnen werden.

Aus (21) folgt, dass die Informations-Symbole $s_1$, $s_2$ der Informations-Matrix $S_k$ direkt aus der Demodulations-Matrix $G_k$ und dann mittels Maximalwahrscheinlichkeits-Demodulationstechniken (maximum likelihood demodulation techniques) schätzbar sind gemäß

$$\hat{s}_{1,k} = \frac{g_{1,k}}{\sqrt{|g_{1,k}|^2 + |g_{2,k}|^2}} \qquad (23)$$

und

$$\hat{s}_{2,k} = \frac{g_{2,k}}{\sqrt{|g_{1,k}|^2 + |g_{2,k}|^2}} . \qquad (24)$$

Für eine Empfangsvorrichtung mit mehreren Empfangsantennen kann ein ähnliches Decodier-Verfahren angewendet werden. In diesem Fall kann für jede Empfangsantenne i das Matrixprodukt der Empfangssignal-Matrix $R_{i,k}. R_{i,k-1}^*$ berechnet werden. Die Informationssymbole $s_{1,k}$ und $s_{2,k}$ werden dekodiert mittels einer modifizierten Demodulations-Matrix $G_k$ unter Verwendung der Summe

$$G_k = \sum_{i=1}^{M_R} R_{i,k} \cdot R_{i,k-1}^* , \qquad (25)$$

wobei $M_R$ der Anzahl von Empfangsantennen entspricht. Aus (21) und (25) folgt, dass dieses Dekodierverfahren für mehrere Empfangsantennen beschrieben werden kann als eine Maximalverhältnis-Kombinationstechnik (MRC - Maximum Ratio Combining Technique).

Gemäß der bevorzugten Ausführungsform wird auf Grundlage dieser Kodierungs- und Dekodierungsverfahren eine Modifikation vorgenommen. Dabei ist von Bedeutung anzumerken, dass alle DSTBC-Schemata gemäß der gewonnenen Erkenntnis geeignet arbeiten, falls

$$S_k \cdot S_k^* = I_2 \qquad (26)$$

gilt, was eine notwendige Bedingung für differenzielles Kodieren ist gemäß Formel (12). Dabei wird bei der bevorzugten APSK-Modulation davon ausgegangen, dass $S_k \cdot S_k^* = I_2$ auch dann noch gilt, falls die Informationssymbole $s_{1,k}$ und $s_{2,k}$ zueinander verschiedene Amplituden haben. Aus der Gleichung ist nur erforderlich, dass die Summe beider Symbol-Betrags-Werte normiert ist gemäß

$$|s_{1,k}|^2 + |s_{2,k}|^2 = 1 . \qquad (27)$$

Eine Bedingung gleicher Amplitude der beiden Informationssymbole $s_{1,k}$ und $s_{2,k}$, wie in Formel (10) gefordert, ist ausreichend, jedoch nicht erforderlich, um die Bedingung von Formel (27) zu erfüllen. Im Vergleich zu (3) bzw. (11) ist daher Formel (27) an geringere Anforderungen geknüpft, was zusätzliche Freiheit für das Kodierungsverfahren gibt. Die Symbol-Amplituden der Informationssymbole $s_{1,k}$ und $s_{2,k}$ können daher für eine weitere Amplituden-Modulations-Technik verwendet werden.

Entsprechend wird gemäß dem besonders bevorzugten Modulations-Schema für DSTBC-Anwendungen vorgeschlagen, eine konstante Sendeenergie zu verwenden, jedoch die beiden Informations-symbole $s_{1,k}$ und $s_{2,k}$ hinsichtlich deren Informationssymbol-Amplitude zu variieren.

Beispielhaft werden nachfolgend zwei PSK-Konstellations-Diagramme betrachtet, ein $M_1$-PSK-Konstellations-Diagramm mit einer ersten Amplitude $A_1$, welches als äußerer Ring bezeichnet wird, und ein $M_2$-PSK-Konstellations-Diagramm mit einer zweiten Amplitude $A_2$, welches als innerer Ring bezeichnet wird, wie dies in Fig.3 dargestellt ist. Die beiden Amplituden erfüllen dabei die Bedingung der Ungleichheit mit $A_1 > A_2$ und der weiteren Normierungsbedingung

$$A_1^2 + A_2^2 = 1 \qquad\qquad\qquad (28)$$

Dargestellt ist dabei eine 2L-APSK-Modulation für eine 3 Bit/s/Hz-Bandbreiten-Effizienz. Der Modulationslevel der beiden Konstellationen $M_1$ und $M_2$ muss nicht notwendigerweise der gleiche sein, da der äußere Ring und der innere Ring unabhängige Konstellations-Diagramme mit verschiedenen Bit-Fehlerraten-Leistungsfähigkeitsfiguren beschreiben. Betrachtet wird beispielhaft der Fall, dass die Anzahl der Informations-Bits, welche durch einen einzelnen DSTBC-Block getragen werden, $2 \cdot L$ ist. Vorzugsweise wird in diesem Fall angesetzt, dass jedes Symbol des äußeren Rings L Informations-Bits und jedes Symbol des inneren Rings L-1 Informations-Bits trägt. Damit gilt beispielhaft

$$M_1 = 2^L \quad \text{und} \quad M_2 = 2^{L-1}. \qquad\qquad (29)$$

Dies bedeutet, dass die Anzahl der Modulationssymbole in dem betrachteten Konstellations-Diagramm des äußeren Rings gedoppelt ist im Vergleich zu dem Konstellations-Diagramm des inneren Rings. Das abschließende Bit des Informations-Bit-Blocks der Länge 2L wird nur durch die Symbol-Amplitude moduliert. Das Modulations-Schema kann daher als 2L-APSK bezeichnet werden.

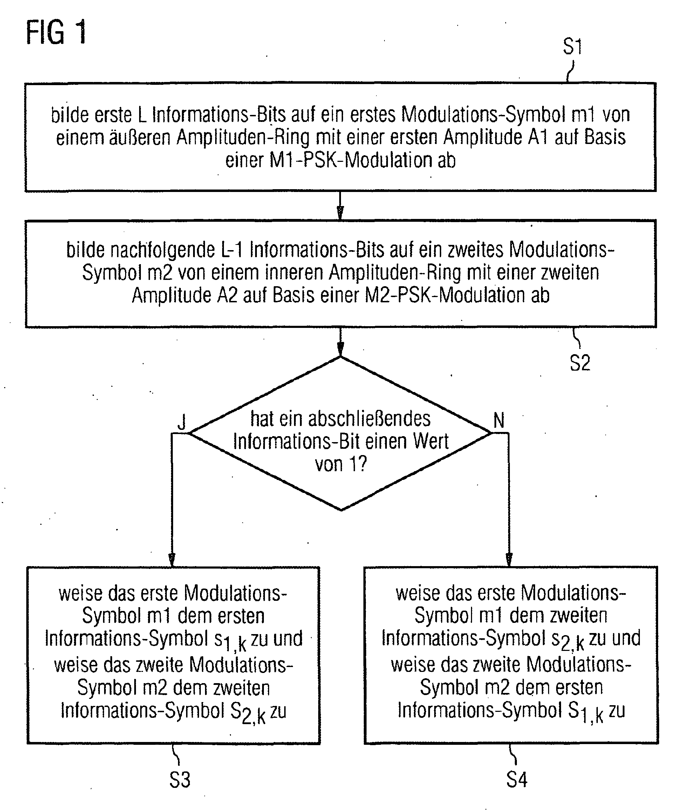

Ein Verfahren zum Kodieren wird nachfolgend anhand von vier Schritten S1 - S4 beispielhaft beschrieben. Die $2 \cdot L$ Informations-Bits werden dabei auf zwei Informationssymbole abgebildet, wie dies auch in Fig. 1 und Fig. 4 skizziert ist.

Beim ersten Schritt S1 werden die ersten L Informations-Bits mittels Gray-Kodiertechnik auf ein erstes Modulations-Symbol ml von dem äußeren Amplituden-Ring mit der ersten Amplitude A1 auf Basis der M1-PSK-Modulation abgebildet. Beim zweiten Schritt S2 werden die nachfolgenden L-1 Informations-Bits erneut mittels Gray-Codierung abgebildet, und zwar auf ein zweites Modulations-Symbol m2 von dem inneren Amplituden-Ring mit der zweiten Amplitude A2 auf Basis der M2-PSK-Modulation.

Falls das abschließende bzw. letzte Informations-Bit einen Wert von 1 hat, dann wird das erste Modulations-Symbol ml im dritten Schritt S3 dem ersten Informations-Symbol $s_{1,k}$ zugewiesen, während das zweite Modulations-Symbol m2 dem zweiten Informations-Symbol $s_{2,k}$ zugewiesen wird. Anderenfalls werden, falls das letzte bzw. finale Informations-Bit den Wert 0 hat, in dem vierten Schritt S4 die Informationssymbole $s_{1,k}$ und $s_{2,k}$ untereinander ausgetauscht, so dass das erste Modulations-Symbol ml dem zweiten Informationssymbol $s_{2,k}$ zugewiesen wird, während das zweite Modulations-Symbol m2 dem ersten Informationssymbol $s_{1,k}$ zugewiesen wird.

Für den beispielhaften Fall mit L = 3 gelten die beiden zu berücksichtigenden PSK-Konstellations-Diagramme 8-PSK und 4-PSK mit $M_1 = 8$ und $M_2 = 4$. Die resultierende Bandbreite-Effizienz beträgt 3 Bit/s/Hz. Im Allgemeinen hat ein solches 2L-APSK-Schema für DSTBC die gleiche Bandbreite-Effizienz wie das klassische DSTBC mit M-PSK und einer $M = 2^L$-Modulation für jedes Informationssymbol.

Die inkohärente Demodulations-Technik wird in vorteilhafter Weise auf die gleiche Art und Weise wie bei der für sich bekannten DSTBC-Modulation durchgeführt. Basierend auf den Informationssymbol-Schätzungen gemäß (23) und (24), welche vom DSTBC-Decoder empfangen werden, kann die inkohärente Demodulation in zwei Schritten durchgeführt werden. In einem ersten Demodulations-Schritt wird das letzte bzw. finale Informations-Bit zuerst durch Vergleichen der Beträge von $|\hat{s}_{1,k}|$ und $|\hat{s}_{2,k}|$ gemäß (23) und (24) demoduliert. Nach dieser Entscheidung wird eine Maximal-Wahrscheinlichkeits-PSK-Demodulation für $\hat{s}_{1,k}$ und $\hat{s}_{2,k}$ angewendet, um die L und die L-1 Informations-Bits zu rekonstruieren.

Falls zum Beispiel $|\hat{s}_{1,k}|^2 > |\hat{s}_{2,k}|^2$ gilt, dann wird entschieden, dass der Wert des finalen Informations-Bits 1 ist

und $\hat{s}_{1,k}$ wird mittels eines $M_1$-PSK-Demodulators demoduliert, während $\hat{s}_{2,k}$ entsprechend dem $M_2$-PSK-Konstellations-Diagramm demoduliert wird.

Der beschriebene Demodulator ist suboptimal, ist dafür aber technisch bemerkenswert einfach und weist praktisch keine Verschlechterung der Leistungsfähigkeit im Vergleich zur vollen Maximal-Wahrscheinlichkeits-Demodulation auf.

Gemäß erster Untersuchungen bietet die bevorzugte 2L-APSK-Modulation einen Gewinn von 2 dB des Signal-zu-Rausch-Verhältnisses gegenüber 16-PSK für die gleiche Bandbreiten-Effizienz, was die Ergebnisse bekannter Lösungen übertrifft. Ein weiterer Vorteil des bevorzugten Modulations-Schemas besteht in dem Vermeiden jeglicher Amplituden-Fluktuationen der übertragenen Gesamtleistung, welche für alle Zeitschlitze konstant bleibt. Vorteilhafter Weise ermöglicht dies auch eine Kombination des bevorzugten 2L-APSK-Modulations-Schemas mit bekannten Ausführungsformen, um beispielsweise zusätzliche Amplituden-Variationen des DSTBC-Blocks als ganzes durchzuführen und die Leistungsfähigkeit insbesondere für hohe Bandbreiten-Effizienzen weiter zu erhöhen.

Eine weitere Optimierung ist durch eine geeignete Auswahl des Amplituden-Verhältnisses der ersten Amplitude $A_1$ relativ zu der zweiten Amplitude $A_2$ möglich, wobei auch eine Berücksichtigung der Anzahl der verwendeten Empfangsantennen vorteilhaft ist.

Zum Auffinden eines vorteilhaften, insbesondere optimalen Amplituden-Verhältnisses $\textbf{\textit{A}}_\textbf{1}/\textbf{\textit{A}}_\textbf{2}$ wird berücksichtigt, dass

$$A_1^2 + A_2^2 = 1 \tag{30}$$

gilt. Um diese Bedingung zu erfüllen, wird ein Amplituden-Faktor $a$ eingeführt gemäß

$$A_1 = \frac{\sqrt{1+a}}{\sqrt{2}}, \quad A_2 = \frac{\sqrt{1-a}}{\sqrt{2}}. \tag{31}$$

Der geeignete Amplituden-Faktor a kann auf einfache Art und Weise insbesondere durch Simulationen ermittelt werden. Bei einer Betrachtung der Bit-Fehlerrate, die über dem Amplituden-Faktor $a$ für verschiedene Signal-zu-Rausch-Verhältnisse abgebildet wird, ist erkennbar, dass ein optimaler Amplituden-Faktor $a$, welcher zu einer minimalen Bit-Fehlerrate zugeordnet wird, robust ist und nicht sehr von den verschiedenen Signal-zu-Rausch-Werten abhängt. Die nachfolgenden Tabellen geben derart bestimmte Amplituden-Faktoren $a$ und zugeordnete erste und zweite Amplituden $\textbf{\textit{A}}_\textbf{1}, \textbf{\textit{A}}_\textbf{2}$ für verschiedene L wieder.

| L | A | $A_1$ | $A_2$ |
|---|---|---|---|
| 3 | 0.66 | 0.91 | 0.412 |
| 4 | 0.53 | 0.875 | 0.485 |
| 5 | 0.47 | 0.857 | 0.515 |
| 6 | 0.44 | 0.849 | 0.529 |

| L | A | $A_1$ | $A_2$ |
|---|---|---|---|
| 3 | 0.64 | 0.906 | 0.424 |
| 4 | 0.51 | 0.869 | 0.495 |
| 5 | 0.49 | 0.863 | 0.505 |
| 6 | 0.49 | 0.863 | 0.505 |

Dabei gibt die erste Tabelle entsprechende Werte für den Fall einer Empfangsantenne und die zweite Tabelle entsprechende Werte für den Empfang mittels dreier Empfangsantennen wieder.

**Patentansprüche**

1. Verfahren zum Kodieren von Daten mit einem differenziellen Raum-Zeit-Blockcode, DSTBC, bei dem

   - eine Kodematrix $C_k$ als ein DSTBC-Block mit zu übertragenden Symbolen ($c_{1,k}$, $c_{2,k}$) aus einer momentanen Informationsmatrix $S_k$ mit einer vorherigen Kodematrix $C_{k-1}$ rekursiv berechnet wird,
   - wobei die Informationsmatrix $S_k$ aus zumindest zwei zu übertragenden Informationssymbolen ($s_{1,k}$ und $s_{2,k}$) gebildet wird, und
   - wobei eine Amplitudenmodulation durchgeführt wird, **dadurch gekennzeichnet, dass**
   - eine Information der Amplitudenmodulation in eine Amplitudendifferenz der zumindest zwei Informationssymbole ($s_{1,k}$, $s_{2,k}$) innerhalb des DSTBC-Blocks kodiert wird.

2. Verfahren nach Anspruch 1, bei dem
   eine Phasenmodulation und die Amplitudenmodulation kombiniert durchgeführt werden.

3. Verfahren nach Anspruch 1 oder 2, bei dem
   die Summe Symbol-Betrags-Werte der zumindest zwei Informationssymbole ($s_{1,k}$, $s_{2,k}$) normiert wird gemäß

$$\left|s_{1,k}\right|^2 + \left|s_{2,k}\right|^2 = 1$$

4. Verfahren nach einem vorstehenden Anspruch, bei dem die zumindest zwei Informationssymbole ($s_{1,k}$, $s_{2,k}$) hinsichtlich ihrer Informationssymbol-Amplitude variieren, wobei jedoch die Sendeenergie konstant gehalten wird.

5. Verfahren nach einem vorstehenden Anspruch, bei dem die Kodematrix $C_k$ durch Multiplizieren der momentanen Informationsmatrix $S_k$ mit der vorherigen Kodematrix $C_{k-1}$ berechnet wird.

6. Verfahren nach einem vorstehenden Anspruch, bei dem die jeweilige Amplitude der Informationssymbole ($s_{1,k}$, $s_{2,k}$) variiert wird, wobei die Summe der Amplitudenquadrate konstant gehalten wird.

7. Verfahren nach einem vorstehenden Anspruch, bei dem eine konstante Einhüllende des Übertragungssignals zusätzlich mit weiteren Kodierverfahren zum Kodieren der Information der Amplitudenmodulation in Amplitudeninformationen des DSTBC-Blocks kombiniert wird.

8. Verfahren nach einem vorstehenden Anspruch, bei dem $2 \cdot L$ Informations-Bits, wobei L>3 ist, auf zwei Informationssymbole abgebildet werden, wobei

   - in einem ersten Schritt (S1) die ersten L Informations-Bits auf ein erstes Modulationssymbol mittels einer ersten PSK-Modulation abgebildet werden, und
   - in einem zweiten Schritt (S2) die nachfolgenden L-1 Informations-Bits auf ein zweites Modulationssymbol mittels einer zweiten PSK-Modulation abgebildet werden, wobei
   - falls ein letztes Informations-Bit einen Wert von 1 hat, in einem nachfolgenden Schritt (S3) das erste Modulationssymbol dem ersten der zumindest zwei Informationssymbole ($s_{1,k}$) zugewiesen wird und das zweite Modulationssymbol dem zweiten der zumindest zwei Informationssymbole ($s_{2,k}$) zugewiesen wird, oder
   - andernfalls in dem nachfolgenden Schritt (S4) das erste Modulationsymbol dem zweiten der zumindest zwei Informations-symbole ($s_{2,k}$) zugewiesen wird und das zweite Modulationssymbol dem ersten der zumindest zwei Informationssymbole ($s_{1,k}$) zugewiesen wird.

9. Verfahren nach Anspruch 8, bei dem
   der ersten PSK-Modulation ein erstes PSK-Konstellations-Diagramm mit einer ersten Amplitude ($A_1$) und der zweiten PSK-Modulation ein zweites PSK-Konstellations-Diagramm mit einer zweiten Amplitude ($A_2$) zugeordnet ist, wobei beide Amplituden zueinander ungleich sind, es also gilt $A_1 > A_2$, und die Summe der Amplitudenquadrate gleich 1 ist, es also gilt .

10. Verfahren nach Anspruch 9, bei dem
   ein Amplituden-Verhältnis der ersten Amplitude ($A_1$) relativ zu der zweiten Amplitude ($A_2$) unter Berücksichtigung einer Anzahl der verwendeten Empfangsantennen bestimmt wird mittel seines Amplituden-Faktors $a$ gemäß

$$A_1 = \frac{\sqrt{1+a}}{\sqrt{2}}, \quad A_2 = \frac{\sqrt{1-a}}{\sqrt{2}} \, .$$

**11.** Verfahren zum Dekodieren empfangener DSTBC-Blöcke, welche mit einem Verfahren nach Anspruch 8, 9 oder 10 kodiert wurden, bei dem

- zunächst ein letztes Informations-Bit zweier empfangener Informationssymbole $\hat{s}_{1,k}$, $\hat{s}_{2,k}$ demoduliert wird, und
- anschließend eine Maximal-Wahrscheinlichkeits-PSK-Demodulation für die empfangenen Informationssymbole $\hat{s}_{1,k}$, $\hat{s}_{2,k}$ angewendet wird, um die ursprünglichen Informations-Bits zu rekonstruieren.

**12.** Verfahren nach Anspruch 11, bei dem
nach dem Demodulieren der letzten Informations-Bit Beträge der empfangenen Informationssymbole $\hat{s}_{1,k}$, $\hat{s}_{2,k}$ verglichen werden.

**13.** Verfahren nach Anspruch 11 oder 12, bei dem nach dem Demodulieren der letzten Informations-Bit abhängig vom Amplitudenverhältnis der letzten Bits entschieden wird, dass

- entweder ein erstes der empfangenen Informationssymbole $\hat{s}_{1,k}$ mittels einer ersten PSK-Demodulation demoduliert wird und ein zweites der empfangenen Informationssymbole $\hat{s}_{2,k}$ mittels einer zweiten PSK-Demodulation demoduliert wird,
- oder umgekehrt dazu das erste der empfangenen Informations-symbole $\hat{s}_{1,k}$ mittels der zweiten PSK-Demodulation demoduliert wird und das zweite der empfangenen Informationssymbole $\hat{s}_{2,k}$ mittels der ersten PSK-Demodulation demoduliert wird.

**14.** Sendevorrichtung zum Übertragen von Daten mit einem differenziellen Raum-Zeit-Blockcode, DSTBC, mit einer Modulationseinrichtung zum Durchführen eines Verfahrens nach Anspruch 1 zum Bereitstellen einer Kodematrix $C_k$ als einem DSTBC-Block aus zu übertragenden Symbolen $(c_{1,k}, c_{2,x})$.

**15.** Empfangsvorrichtung zum Empfangen von Daten über eine Funkschnittstelle, wobei die Daten sendeseitig mit einem differenziellen Raum-Zeit-Blockcode, DSTBC, gemäß einem Verfahren nach Anspruch 1 bereitgestellt werden, und welche mit Mitteln zum Durchführen eines Demodulationsverfahrens nach Anspruch 11 ausgestaltet ist.

**Claims**

**1.** Method for encoding data with a differential space time block code, DSTBC, in which

- a code matrix $C_k$ is computed recursively as a DSTBC block with symbols $(c_{1,k}, c_{2,k})$ to be transmitted from an instantaneous code matrix $C_{k-1}$,
- wherein the information matrix $S_k$ is formed from at least two information symbols $(s_{1,k}$ and $s_{2,k})$ to be transmitted, and
- wherein an amplitude modulation is performed, **characterised in that**
- amplitude modulation information is encoded into an amplitude difference of the at least two information symbols $(s_{1,k}, s_{2,k})$ within the DSTBC block.

**2.** Method according to claim 1, in which
a phase modulation and the amplitude modulation are performed in combination.

**3.** Method according to claim 1 or 2, in which
the sum symbol amount values of the at least two information symbols $(s_{1,k}, s_{2,k})$ are normalized according to

$$\left| s_{1,k} \right|^2 + \left| s_{2,k} \right|^2 = 1 \, .$$

**4.** Method according to a preceding claim, in which the at least two information symbols $(s_{1,k}, s_{2,k})$ vary with respect to their information symbol amplitude, with the transmit energy being kept constant however.

5. Method according to a preceding claim, in which the code matrix $C_k$ is computed by multiplying the instantaneous information matrix $S_k$ by the previous code matrix $C_{k-1}$.

6. Method according to a preceding claim, in which the respective amplitude of the information symbols ($s_{1,k}$, $s_{2,k}$) is varied, wherein the sum of the amplitude squares is kept constant.

7. Method according to a preceding claim, in which a constant envelope of the transmission signal is additionally combined with further coding methods for encoding the information into amplitude information of the DSTBC block.

8. Method according to a preceding claim, in which **2·L** information bits, with L>3, are mapped onto two information symbols, wherein

    - in a first step (S1) the first L information bits are mapped onto a first modulation symbol by means of a first PSK modulation, and
    - in a second step (S2) the subsequent L-1 information bits are mapped onto a second modulation symbol by means of a second PSK modulation, with
    - if a last information bit has a value of 1, in a subsequent step (S3) the first modulation symbol is allocated to the first of the at least two information symbols ($s_{1,k}$) and the second modulation symbol is allocated to the second of the at least two information symbols ($s_{2,k}$), or
    - otherwise in the subsequent step (S4) the first modulation symbol is allocated to the second of the at least two information symbols ($s_{2,k}$) and the second modulation symbol is allocated to the first of the at least two information symbols ($s_{1,k}$).

9. Method according to claim 8, in which
the first PSK modulation is assigned a first PSK constellation diagram with a first amplitude ($A_1$) and the second PSK modulation is assigned a second PSK constellation diagram with a second amplitude ($A_2$), with both amplitudes being unequal to each other, i.e. **$A_1$>$A_2$** applies, and the sum of the amplitude squares being equal to 1, i.e.

$$A_1^2 + A_2^2 = 1 \text{ applies.}$$

10. Method according to claim 9, in which
an amplitude ratio of the first amplitude ($A_1$) relative to the second amplitude ($A_2$) is defined, taking into account a number of the receive antennas used, by means of its amplitude factor *a* according to

$$A_1 = \frac{\sqrt{1+a}}{\sqrt{2}}, \quad A_2 = \frac{\sqrt{1-a}}{\sqrt{2}} .$$

11. A method for decoding received DSTBC blocks, which were encoded with a method according to claim 8, 9 or 10, in which

    - initially a last information bit of two received information symbols $\hat{s}_{1,k}$, $\hat{s}_{2,k}$ is demodulated and
    - subsequently a maximum probability PSK demodulation for the received information symbols $\hat{s}_{1,k}$, $\hat{s}_{2,k}$ is applied in order to reconstruct the original information bits.

12. Method according to claim 11, in which,
after the demodulation of the last information bit amounts the received information symbols $\hat{s}_{1,k}$, $\hat{s}_{2,k}$ are compared.

13. Method according to claim 11 or 12, in which
after the demodulation of the last information bit, a decision is made, depending on the amplitude ratio of the last bits, that

    - either the first of the received information symbols $\hat{s}_{1,k}$ will be demodulated by means of the first PSK demodulation and a second of the received information symbols $\hat{s}_{1,k}$ will be demodulated by means of a second PSK demodulation,
- or conversely the first of the received information symbols $\overset{\wedge}{s}_{1,k}$ will be demodulated by means of the second PSK demodulation and the second of the received information symbols $\overset{\wedge}{s}_{1,k}$ will be demodulated by means of the first PSK demodulation.

14. Send device for transmission of data with a differential space time block code, DSTBC, with a modulation device for carrying out a method according to claim 1 for providing a code matrix $C_k$ as a DSTBC block from the symbols $(c_{1,k}, c_{2,k})$ to be transmitted.

15. Receive device for receiving data via a radio interface, with the data being provided on the send side with a differential space time block code, DSTBC in accordance with a method according to claim 1, and which is embodied with means for performing a demodulation method according to claim 11.

**Revendications**

1. Procédé pour coder des données avec un code de bloc espace-temps différentiel, DSTBC, dans lequel

   - une matrice de code $C_k$ est calculée récursivement en tant que bloc DSTBC avec des symboles à transmettre $(c_{1,k}, c_{2,k})$ à partir d'une matrice d'information momentanée $S_k$ avec une matrice de code précédente $C_{k-1}$,
   - la matrice d'information $S_k$ étant formée à partir d'au moins deux symboles d'information à transmettre ($s_{1,k}$ et $s_{2,k}$) et
   - une modulation d'amplitude étant effectuée,
   **caractérisé en ce que**
   - une information de la modulation d'amplitude est codée en une différence d'amplitude des au moins deux symboles d'information ($s_{1,k}$, $s_{2,k}$) à l'intérieur du bloc DSTBC.

2. Procédé selon la revendication 1, dans lequel une modulation de phase et la modulation d'amplitude sont effectuées en combinaison.

3. Procédé selon la revendication 1 ou 2, dans lequel la somme des valeurs absolues de symboles des au moins deux symboles d'information ($s_{1,k}$, $s_{2,k}$) est normée selon

$$\left| s_{1,k} \right|^2 + \left| s_{2,k} \right|^2 = 1 .$$

4. Procédé selon une revendication précédente, dans lequel les au moins deux symboles d'information ($s_{1,k}$, $s_{2,k}$) varient au regard de leur amplitude de symbole d'information, l'énergie d'émission étant toutefois maintenue constante.

5. Procédé selon une revendication précédente, dans lequel la matrice de code $C_k$ est calculée par multiplication de la matrice d'information momentanée $S_k$ par la matrice de code précédente $C_{k-1}$.

6. Procédé selon une revendication précédente, dans lequel l'amplitude respective des symboles d'information ($s_{1,k}$, $s_{2,k}$) subit des variations, la somme des carrés des amplitudes étant maintenue constante.

7. Procédé selon une revendication précédente, dans lequel une enveloppe constante du signal de transmission est additionnellement combinée à d'autres procédés de codage pour coder l'information de la modulation d'amplitude en informations d'amplitude du bloc DSTBC.

8. Procédé selon une revendication précédente, dans lequel **2·L** bits d'information, avec L>3, sont appliqués sur deux symboles d'information,

   - les premiers L bits d'information étant, dans une première étape (S1), appliqués sur un premier symbole de modulation au moyen d'une première modulation PSK, et
   - Les L-1 bits d'information suivants étant, dans une deuxième étape (S2), appliqués sur un deuxième symbole de modulation au moyen d'une deuxième modulation PSK,

- si un dernier bit d'information a une valeur de 1, dans une étape suivante (S3), le premier symbole de modulation étant affecté au premier des au moins deux symboles d'information ($s_{1,k}$) et le deuxième symbole de modulation étant affecté au deuxième des au moins deux symboles d'information ($s_{2,k}$) ou,

- dans le cas contraire, à l'étape suivante (S4), le premier symbole de modulation étant affecté au deuxième des au moins deux symboles d'information ($s_{2,k}$) et le deuxième symbole de modulation étant affecté au premier des au moins deux symboles d'information ($s_{1,k}$).

9. Procédé selon la revendication 8, dans lequel un premier diagramme de constellation PSK avec une première amplitude ($A_1$) est affecté à la première modulation PSK et un deuxième diagramme de constellation PSK avec une deuxième amplitude ($A_2$) est affecté à la deuxième modulation PSK, les deux amplitudes étant inégales entre elles, c'est-à-dire que $A_1 > A_2$, et la somme des carrés des amplitudes étant égale à 1, c'est-à-dire que

$$A_1^2 + A_2^2 = 1 \; . \; .$$

10. Procédé selon la revendication 9, dans lequel un rapport d'amplitudes, de la première amplitude ($A_1$) relativement à la deuxième amplitude ($A_2$), est déterminé, compte tenu d'un nombre des antennes réceptrices utilisées, au moyen de son facteur d'amplitude **a** conformément à

$$A_1 = \frac{\sqrt{1+a}}{\sqrt{2}}, \quad A_2 = \frac{\sqrt{1-a}}{\sqrt{2}} \; .$$

11. Procédé pou décoder des blocs DSTBC reçus qui ont été codés par un procédé selon la revendication 8, 9 ou 10, dans lequel,

- tout d'abord, un dernier bit d'information de deux symboles d'information reçus $\hat{s}_{1,k}$, $\hat{s}_{2,k}$ est démodulé et
- ensuite, une démodulation PSK de probabilité maximale est utilisée pour les symboles d'information reçus $\hat{s}_{1,k}$, $\hat{s}_{2,k}$ afin de reconstruire les bits d'information d'origine.

12. Procédé selon la revendication 11, dans lequel les valeurs absolues des symboles d'information reçus $\hat{s}_{1,k}$, $\hat{s}_{2,k}$ sont comparées après la démodulation des derniers bits d'information.

13. Procédé selon la revendication 11 ou 12, dans lequel il est décidé, après la démodulation des derniers bits d'information, en fonction du rapport d'amplitudes des derniers bits, que :

- soit un premier des symboles d'information reçus $\hat{s}_{1,k}$ est démodulé au moyen d'une première démodulation PSK et un deuxième des symboles d'information reçus $\hat{s}_{2,k}$ est démodulé au moyen d'une deuxième démodulation PSK ;
- ou, inversement, le premier des symboles d'information reçus $\hat{s}_{1,k}$ est démodulé au moyen de la deuxième démodulation PSK et le deuxième des symboles d'information reçus $\hat{s}_{2,k}$ est démodulé au moyen de la première démodulation PSK.

14. Dispositif émetteur pour transmettre des données avec un code de bloc espace-temps différentiel, DSTBC, avec un dispositif de modulation pour exécuter un procédé selon la revendication 1 pour fournir une matrice de code $C_k$ en tant que bloc DSTBC constitué de symboles à transmettre ($c_{1,k}$, $c_{2,k}$).

15. Dispositif récepteur pour recevoir des données via une interface radio, les données étant fournies, côté émetteur, avec un code de bloc espace-temps différentiel, DSTBC, selon un procédé selon la revendication 1, et ledit dispositif étant réalisé avec des moyens pour exécuter un procédé de démodulation selon la revendication 11.

## FIG 1

S1

bilde erste L Informations-Bits auf ein erstes Modulations-Symbol m1 von einem äußeren Amplituden-Ring mit einer ersten Amplitude A1 auf Basis einer M1-PSK-Modulation ab

bilde nachfolgende L-1 Informations-Bits auf ein zweites Modulations-Symbol m2 von einem inneren Amplituden-Ring mit einer zweiten Amplitude A2 auf Basis einer M2-PSK-Modulation ab

S2

hat ein abschließendes Informations-Bit einen Wert von 1?

J          N

weise das erste Modulations-Symbol m1 dem ersten Informations-Symbol $s_{1,k}$ zu und weise das zweite Modulations-Symbol m2 dem zweiten Informations-Symbol $s_{2,k}$ zu

weise das erste Modulations-Symbol m1 dem zweiten Informations-Symbol $s_{2,k}$ zu und weise das zweite Modulations-Symbol m2 dem ersten Informations-Symbol $s_{1,k}$ zu

S3          S4

## FIG 2

$T_2$    $T_1$

| $-c^*_{2,k}$ | $c_{1,k}$ |
|---|---|
| $c^*_{1,k}$ | $c_{2,k}$ |

$T_2$    $T_1$

| $r_{2,k}$ | $r_{1,k}$ |
|---|---|

## FIG 3

| $-c^*_{2,k}$ | $c_{1,k}$ |
|---|---|
| $c^*_{1,k}$ | $c_{2,k}$ |

$$R_{1,k} \cdot R^*_{1,k-1}$$

$$R_{2,k} \cdot R^*_{2,k-1}$$

$$R_{MR,k} \cdot R^*_{MR,k-1}$$

$+$   $G_k$

## FIG 4

$S_{1,k}$        $S_{2,k}$

| $M_1$-PSK, $A_1$ | $M_2$-PSK, $A_2$ | 1 |
|---|---|---|
| L Bits | L-1 Bits | letztes Bit |

$S_{2,k}$        $S_{1,k}$

| $M_1$-PSK, $A_1$ | $M_2$-PSK, $A_2$ | 0 |
|---|---|---|
| L Bits | L-1 Bits | letztes Bit |

## FIG 5A

## FIG 5B

## FIG 6

2L-APSK
16-PSK

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- **V. TAROKH ; H. JAFARKHANI.** A differential detection scheme for transmit diversity. *IEEE Journal on Selected Areas in Communications,* Juli 2000, vol. 18, 1169-1174
- **S. ALAMOUTI.** A simple transmit diversity technique for wireless communications. *IEEE Journal on Selected Areas of Communications, Special Issue on Signal Processing for Wireless Communications,* 1998, vol. 16 (8), 1451-1458
- **C. GAO ; HAIMOVICH, D. LAO.** Bit Error Probability for Space-Time Block Code with Coherent and Differential Detection. *IEEE Vehicle Technology Conference (VTC'02 Fall,* September 2002
- **H. JAFARKHANI ; V. TAROKH.** Multiple transmit antenna differential detection from generalized orthogonal designs. *IEEE Transactions on Information Theory,* September 2001, vol. 47, 2626-2631
- **H. ROHLING ; V. ENGELS.** Differential amplitude phase shift keying, (DAPSK) - a new modulation method for DVBT. *International Bröadcasting Convention,* 1995, 102-108
- **X.-G. XIA.** Differentially en/decoded orthogonal space-time block codes with APSK signals. *IEEE Communications Letters,* April 2002, vol. 6, 150-152
- **G. BAUCH.** A Bandwidth-efficient Scheme for Non-coherent Transmit Diversity. *Proc. of IEEE Globecom Conference,* 01. Dezember 2003
- **G. BAUCH.** Differential Amplitude and Unitary Space-Time Modulation. *Proc. of 5th International ITG Conference on Source and Channel Coding,* 14. Januar 2004
- **HWANG, C.-S.** Differential Space Time Block Codes Using Nonconstant Modulus Constellations. *IEEE Transactions on Signal Processing,* November 2003, vol. 51 (11), 2955-2964